# EUROPEAN PATENT APPLICATION

(11) **EP 4 303 081 A1**
(43) Date of publication of application: **10.01.2024**
(21) Application number: 22762886.4
(22) Date of filing: 03.02.2022
(51) Int. Cl.: B60R 16/023, G06F 11/07, G06F 11/34

(54) **VEHICULAR DEVICE, SERVER, AND COMMUNICATION MANAGEMENT METHOD**

(30) Priority: 05.03.2021 JP 2021035488
(71) Applicant: DENSO CORPORATION, Kariya-city, Aichi-pref., 448-8661 (JP)
(72) Inventor: IKUSHIMA Keisuke, Kariya-city, Aichi 448-8661 (JP); IKUSHIMA Keisuke, Kariya-city, Aichi-pref., 448-8661 (JP)
(74) Representative: Winter, Brandl - Partnerschaft mbB
(86) International application number: PCT/JP2022/004226
(87) International publication number: WO 2022/185828

(57) **Abstract**

A log is exchange information in a communication establishment process between an in-vehicle ECU mounted on a vehicle and an application server on a WAN. A monitoring unit (16) configured to centrally manage the log and detect a failure in the communication establishment process and a cause identification log output unit (26) configured to, when the monitoring unit (16) has detected a failure, output a cause identification log estimated to enable identification of a cause of the failure among the log centrally managed by the monitoring unit (16) are included.

## Description

### CROSS REFERENCE TO RELATED APPLICATION

This application is based upon and claims the benefit of priority from Patent Application No. 2021-035488 filed in Japan on March 5, 2021, the entire contents of which are incorporated herein by reference.

### TECHNICAL FIELD

The present disclosure relates to a vehicle device, a server, a communication management method.

### BACKGROUND

Patent Literature 1 discloses a technology for performing communication between an electronic control unit mounted on a vehicle (hereinafter referred to as an in-vehicle ECU) and a network outside the vehicle.

### RELATED ART LITERATURE

### PATENT LITERATURE

Patent Literature 1: JP 2014-165641 A

### SUMMARY OF THE INVENTION

Patent Literature 1 describes that a proxy unit performs communication between the in-vehicle ECU (electronic control unit) and the network outside the vehicle. However, there is no description of a case where the communication between the in-vehicle electronic control unit and a connection destination (hereinafter referred to as a vehicle exterior connection destination) on the network outside the vehicle fails. In other words, no consideration is given to a mechanism for identifying a failure in the process of establishing a communication connection between the in-vehicle ECU and the vehicle exterior connection destination. Without such a mechanism, it is difficult to identify a difficulty in the process of establishing the communication connection between the in-vehicle ECU and the vehicle exterior connection destination. As a result, it takes time to eliminate the failure in the process of establishing the communication connection between the in-vehicle ECU and the vehicle exterior connection destination.

It is an object of the present disclosure to provide a vehicle device, a server, and a communication management method capable of eliminating a failure in a process of establishing a communication connection between an in-vehicle ECU and a vehicle exterior connection destination.

The above object is achieved by a combination of features described in independent claims, and sub-claims defines further advantageous embodiments of the disclosure. The reference symbols in parentheses described in claims indicate correspondence to the concrete means described in the embodiment, and the concrete means is described as an example. Thus, the technical scope of the present disclosure is not necessarily limited thereto.

In order the achieve the above object, a vehicle device of the present disclosure is used for a vehicle. The device includes: a monitoring unit configured to recognize a status of an exchange in a communication establishment process between an in-vehicle electronic control unit mounted on the vehicle and a connection destination on a network outside the vehicle, centrally manage a log of the exchange, and detect a failure in the communication establishment process; and a log output unit configured to output a log estimated to be related to the failure among the log centrally managed by the monitoring unit when the monitoring unit has detected the failure.

Further, in order to achieve the object, a first communication management method of the present disclosure is executed by at least one processor. The method includes: a monitoring process of centrally managing a log that is information of the exchange in a communication establishment process between an in-vehicle electronic control unit mounted on a vehicle and a connection destination on a network outside the vehicle; a failure detection process of detecting a failure in the communication establishment process; and a log output process of outputting the log estimated to be related to the failure among the log managed by the monitoring process when having detected the failure in the failure detection process.

According to the above configurations, the log is information of the exchange in a communication establishment process between an in-vehicle electronic control unit mounted on a vehicle and a connection destination on a network outside the vehicle, and the log is centrally managed. Therefore, when the failure in the communication establishment process is detected, it is possible to output the log estimated to be related to the failure among the logs. Therefore, it is possible to identify the failure in the process of establishing the communication connection based on this log, and to eliminate the failure. As a result, it is possible to more easily eliminate the failure in the process of establishing the communication connection between the in-vehicle ECU and the vehicle exterior connection destination.

Further, in order to achieve the object, a server of the present disclosure is used on a network outside a vehicle. The server includes: a log acquisition unit configured to acquire a log output from a vehicle device used for the vehicle, wherein the vehicle device is configured to centrally manage the log that is information of an exchange in a communication establishment process between an in-vehicle device mounted on the vehicle and a connection destination on the network outside the vehicle to output the log estimated to be related to a failure in the communication establishment process among the centrally managed log; and a log storage configured to store the log acquired by the log acquisition unit from the vehicle device.

Further, in order to achieve the object, a second communication management method of the present disclosure is executed by at least one processor. The method includes: a log acquisition process of acquiring a log output from a vehicle device used for the vehicle, wherein the vehicle device is configured to recognize and centrally manage the log that is a status of an exchange in a communication establishment process between an in-vehicle device mounted on the vehicle and a connection destination on the network outside the vehicle to output the log estimated to be related to a failure in the communication establishment process among the centrally managed log; and a log storage process of storing the log acquired by the log acquisition process from the vehicle device.

According to the above configuration, a log is output from the vehicle device and is estimated to be related to the failure in the process of establishing communication between the in-vehicle ECU mounted on the vehicle and the connection destination on the network outside the vehicle, and the log can be stored in devices of the server. Further, it becomes possible for the server to acquire such a log from all vehicles equipped with this vehicle device. Therefore, it is possible to identify the failure in the process of establishing the communication connection based on the stored log, and to eliminate the failure. As a result, it is possible to more easily eliminate the failure in the process of establishing the communication connection between the in-vehicle ECU and the vehicle exterior connection destination.

### BRIEF DESCRIPTION OF DRAWINGS

FIG. 1 is a diagram showing an example of a schematic configuration of a communication process system.
FIG. 2 is a diagram showing an example of a schematic configuration of a communication module 10 and an ACP engine 10a.
FIG. 3 is a diagram for illustrating an example of exchanges in a process of establishing a communication between the in-vehicle ECU 40 and an application server 140.
FIG. 4 is a diagram showing an example of a schematic configuration of a cloud server 100 and an ACP cloud 100a.
FIG. 5 is a flowchart showing an example of a flow of a failure detection-related process in the ACP engine 10a.

### DESCRIPTION OF EMBODIMENTS

Multiple embodiments will be described with reference to the drawings. For convenience of description, among multiple embodiments, a configuration having the same function as a configuration shown in the drawing and described in the previous embodiment may be indicated by the same reference symbol, and the description thereof may be omitted. The description of other embodiments may be referred to with respect to these portions given the same reference symbols.

### (First Embodiment)

### (Schematic configuration of communication process system)

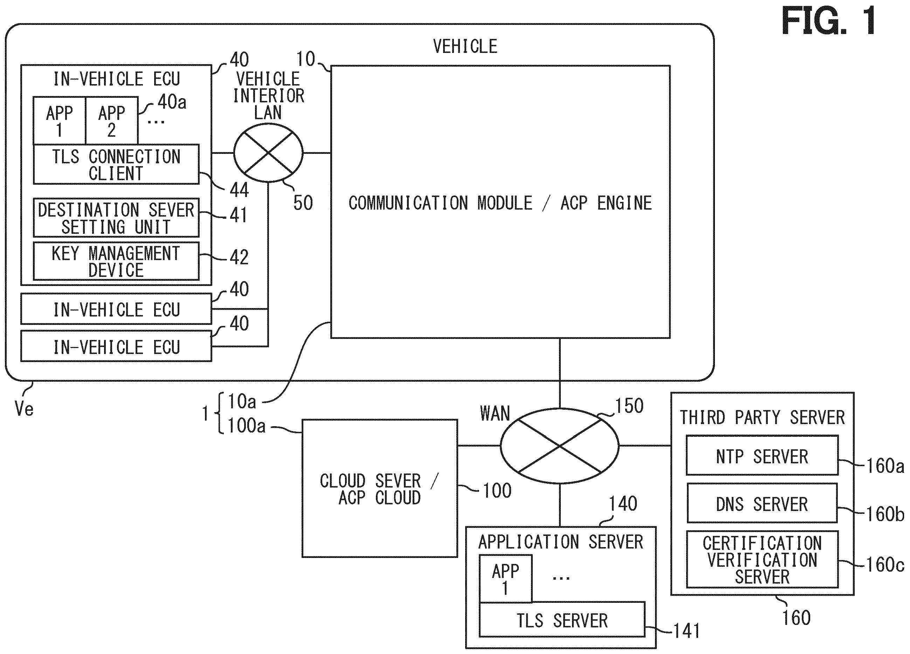

Hereinafter, a present embodiment will be described with reference to the drawings. First, a communication process system will be described with reference to FIG. 1. For example, a communication process system is an automotive wireless communication platform 1 including an ACP cloud 100a and an ACP engine 10a. The automotive wireless communication platform 1 provides the functions required to implement a connection of all the in-vehicle ECUs 40 with the server outside the vehicle for each vehicle Ve. Hereinafter, details of a cloud system, an in-vehicle system, and the like, which constitute the communication process system, will be described in order.

The cloud system is a configuration group provided outside the vehicle Ve among communication process systems. The cloud system includes a cloud server 100. Besides the cloud system, an application server 140 and a third party server 160 also exist. The cloud server 100, the application server 140, and the third party server 160 are connected to a WAN (Wide Area Network) 150, which is a communication network outside the vehicle.

The application server 140 becomes a substantial connection destination of the in-vehicle ECU 40. The application server 140 performs application communication with the in-vehicle ECU 40. The application server 140 has a TLS (Transport Layer Security) server 141. The TLS server 141 cooperates with a TLS connection client 44, which is described later, of the in-vehicle ECU 40 and executes a process related to TLS construction. The TLS construction enables encrypted application communication between the in-vehicle ECU 40 and the application server 140.

The third party server 160 is, for example, an NTP (Network Time Protocol) server 160a, a DNS (Domain Name System) server 160b, a certification verification server 160c, and the like. The NTP server 160a is a server device that delivers time information to other nodes and synchronizes the time information. The DNS server 160b is a server device that provides name solution information to other nodes. The DNS server 160b returns an IP address associated with a domain name as name solution information to a sender of the domain name. The certification verification server 160c is a server device that provides certification verification information for validity legitimacy and revocation confirmation of various certifications used when building TLS. An administrator who manages the NTP server 160a, the DNS server 160b, and the certification verification server 160c is generally different from an administrator who manages the cloud server 100 in many cases.

The cloud server 100 can exchange information with the communication module 10 mounted on the vehicle Ve by wireless communication via a communication network. In the cloud server 100, the ACP cloud 100a that implements cloud functions for the cloud of the automotive wireless communication platform 1 operates. The ACP cloud 100a collects, from the communication module 10, information (hereinafter referred to as E2E connection failure information) about failures in the process of establishing an E2E connection between the in-vehicle ECU 40 and the application server 140. The E2E connection referred to here refers to a connection state in which application communication can be performed between the in-vehicle ECU 40 and the application server 140. The cloud server 100 will be detailed later.

It is preferable that a plurality of communication modules 10 are connected to the cloud server 100 via a WAN 150. Thereby, the cloud server 100 can collect the E2E connection failure information from a plurality of vehicles. As a result, it becomes easier to identify the trend, occurrence rate, and the like of the failures in the process of establishing the E2E connection.

The in-vehicle system is a configuration group provided inside the vehicle Ve among communication process systems. The in-vehicle system includes a communication module 10 and a plurality of in-vehicle ECUs 40. Only one in-vehicle ECU 40 may be included in the in-vehicle system. Alternatively, the in-vehicle ECU 40 and the communication module 10 may be integrated. When adopting a configuration in which the in-vehicle ECU 40 and the communication module 10 are not integrated, the in-vehicle system may include at least one in-vehicle ECU 40. The communication module 10 and the in-vehicle ECU 40 are connected to an in-vehicle LAN (Local Area Network) 50, which is an in-vehicle communication network. The vehicle interior LAN 50 is an IP network mainly including Ethernet (registered trademark) or the like. A part of the communication module 10 and the in-vehicle ECU 40 may be directly or indirectly connected to the vehicle interior LAN 50 in a connection form such as USB, for example. In the present embodiment, the vehicle interior LAN 50 and the WAN 150, which is a network outside the vehicle, are also TCP/IP networks.

The communication module 10 is called a TCU (Telematics Control Unit), a DCM (Data Communication Module), or the like. The communication module 10 enables wireless communication between the in-vehicle system and the outside. Even when the power of the vehicle Ve is off, such as, for example, when the vehicle is parked, the communication module 10 continues to be capable of wireless communication and maintains an online state connected to the network. In the communication module 10, the ACP engine 10a of the automotive wireless communication platform 1 operates. The ACP engine 10a centrally manages exchanges in the process of establishing the E2E connection between the in-vehicle ECU 40 and the application server 140. Then, the ACP engine 10a detects the failure of the exchanges in the process of establishing the E2E connection. The communication module 10 will be detailed later.

The in-vehicle ECU 40 is a control device mounted in the vehicle Ve. The in-vehicle ECU 40 mainly includes a microcontroller. The in-vehicle ECU 40 corresponds to an end ECU in an in-vehicle system. The in-vehicle ECU 40 may be any of a body system ECU, a vehicle control system ECU, an ADAS system or automated driving system ECU, and an HMI system ECU. The in-vehicle ECU 40 can execute one or more applications 40a. The application 40a provides various services to the user of the vehicle Ve by performing application communication with the application server 140. Unlike the communication module 10, the in-vehicle ECU 40 cannot perform communication basically in order to reduce power consumption when the power source of the vehicle Ve is turned off.

The application 40a may not be installed in some of the in-vehicle ECUs 40. Further, the communication module 10 may be provided in an in-vehicle system as a configuration that also serves as the in-vehicle ECU 40, and may be capable of executing the application 40a.

The in-vehicle ECU 40 includes a destination server setting unit 41, a key management device 42, and a TLS connection client 44 as functional blocks. The destination server setting unit 41 sets, as the IP address of the ACP engine 10a, at least one of the time information, name solution information, or certification verification information. The key management device 42 is provided in the in-vehicle ECU 40 as a hardware independent configuration from other circuit units. The key management device 42 manages key information used for authenticating the application server 140. The TLS connection client 44 uses the key information managed by the key management device 42 to authenticate whether the application server 140 is a legitimate access destination. That is, the TLS connection client 44 authenticates the server. Client authentication is performed in the similar way on the application server side.

### (Schematic configuration of communication module 10)

The communication module 10 includes, for example, a processor, a memory, an I/O, and a bus connecting these components, and executes functions of the ACP engine 10a by executing a control program stored in the memory. The memory referred to here is a non-transitory tangible storage medium, and stores programs and data that can be read by a computer. Further, the non-transitory tangible storage medium is implemented by a semiconductor memory or the like. The communication module 10 having the functions of the ACP engine 10a corresponds to a vehicle device. Further, execution of a process of each functional block of the ACP engine 10a by the computer corresponds to execution of a communication management method.

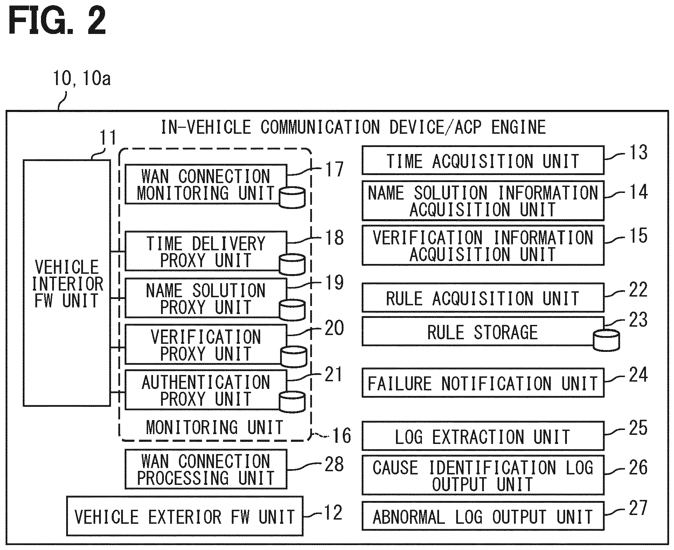

Here, a schematic configuration of the communication module 10 will be described with reference to FIG. 2. As shown in FIG. 2, the communication module 10 includes, as functional blocks of the ACP engine 10a, a vehicle interior FW (Firewall) unit 11, a vehicle exterior FW unit 12, a time acquisition unit 13, a name solution information acquisition unit 14, a verification information acquisition unit 15, a monitoring unit 16, a rule acquisition unit 22, a rule storage 23, a failure notification unit 24, a log extraction unit 25, a cause identification log output unit 26, an abnormal log output unit 27, and a WAN connection processing unit 28. A part or all of the functions executed by the communication module 10 may be configured as hardware by one or a plurality of ICs or the like. A part or all of the functional blocks included in the communication module 10 may be implemented by a combination of software execution by a processor and hardware members.

The vehicle interior FW unit 11 is provided at a connection portion with the vehicle interior LAN 50 in the ACP engine 10a. Communication between the ACP engine 10a and the vehicle interior LAN 50 always passes through the vehicle interior FW unit 11. The vehicle interior FW unit 11 cuts off communication determined to be illegal based on a predetermined standard among vehicle interior communications from the vehicle interior LAN 50 to the ACP engine 10a.

The vehicle exterior FW unit 12 is provided at a connection portion with the WAN 150 in the ACP engine 10a. Communication between the ACP engine 10a and the WAN 150 always passes through the vehicle exterior FW unit 12. The vehicle exterior FW unit 12 cuts off communication determined to be illegal based on a predetermined standard among the vehicle exterior communication between the in-vehicle system and the WAN 150.

The time acquisition unit 13, the name solution information acquisition unit 14, and the verification information acquisition unit 15 acquire various types of information from the third party server 160. That is, information is shared between the ACP engine 10a and the third party server 160. The time acquisition unit 13 acquires the time information from the NTP server 160a. The name solution information acquisition unit 14 acquires the name solution information from the DNS server 160b. The verification information acquisition unit 15 acquires the certification verification information from the certification verification server 160c. When the ACP cloud 100a manages information equivalent to that of the third party server 160, the time acquisition unit 13, the name solution information acquisition unit 14, and the verification information acquisition unit 15 acquire these information from the ACP cloud 100a.

The monitoring unit 16 centrally manages information (hereinafter, log) of exchanges in the process of establishing the communication between the in-vehicle ECU 40 and the application server 140. In other words, the monitoring unit 16 centrally manages logs in exchanges in the communication establishment process of the E2E connection. The process of centrally managing the exchange information in the communication establishment process corresponds to a monitoring process. The term of "central management" as used herein refers to executing or mediating the exchanges in the process of establishing the E2E connection, and acquiring and retaining information on these exchanges.

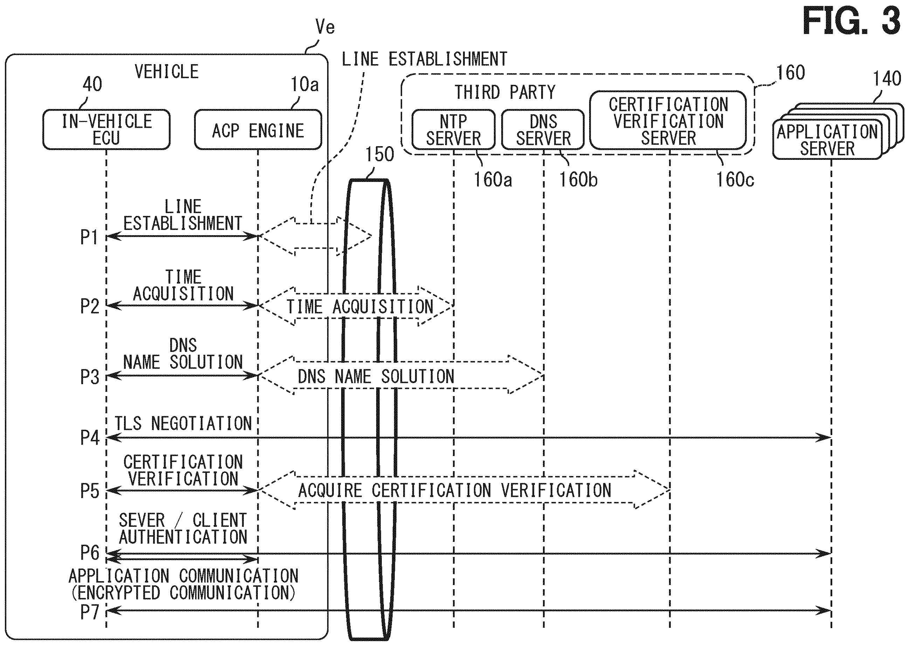

Here, an example of the exchanges in the process of establishing the communication between the in-vehicle ECU 40 and the application server 140 will be described with reference to FIG. 3. In the example of the present embodiment, a case where line establishment, time acquisition, DNS name solution, TLS negotiation, certification verification, server-client authentication, and application communication are required as exchanges in the process of establishing the E2E connection will be taken as an example and described. Although FIG. 3 shows a case where only one vehicle Ve is connected to the WAN 150, it is assumed that a plurality of vehicles Ve can be connected to the WAN 150.

First, in the process of establishing a line indicated by P1, communication is performed between the in-vehicle ECU 40 and the WAN 150 to establish a connection (hereinafter referred to as line establishment). The WAN connection processing unit 28 establishes the line. In the time acquisition process indicated by P2, the in-vehicle ECU 40 recognizes the presence or absence of time information. Then, when the time information is absent, the time information is acquired by in-vehicle communication to a time delivery proxy unit 18, as described later. As described later, the time delivery proxy unit 18 acquires time information from the NTP server 160a.

In the DNS name resolution process indicated by P3, the in-vehicle ECU 40 acquires the name solution information through the in-vehicle communication to the name solution proxy unit 19, which will be described later. As described later, the name solution proxy unit 19 acquires the name solution information from the DNS server 160b. In the process of TLS negotiation indicated by P4, the in-vehicle ECU 40 makes a connection request to the application server 140. That is, the TLS negotiation is performed.

In the certification verification process indicated by P5, the in-vehicle ECU 40 verifies the legitimacy and revocation of each certification. Here, the in-vehicle ECU 40 acquires the certification verification information through the vehicle interior communication to the verification proxy unit 20 as described later. As described later, the verification proxy unit 20 acquires the certification verification information from the certification verification server 160c. In the server-client authentication process indicated by P6, the in-vehicle ECU 40 performs mutual authentication between the application server 140 and the in-vehicle ECU 40 using the key information managed by the key management device 42. The in-vehicle ECU 40 acts as a proxy for exchanges in this mutual authentication via the authentication proxy unit 21, which will be described later. In an application communication process indicated by P7, when the TLS construction is completed, the in-vehicle ECU 40 performs the application communication on an encrypted communication path.

Next, processes in the monitoring unit 16 will be described in detail. As shown in FIG. 2, the monitoring unit 16 includes a WAN connection monitoring unit 17, a time delivery proxy unit 18, a name solution proxy unit 19, a verification proxy unit 20, and an authentication proxy unit 21.

The WAN connection monitoring unit 17 monitors exchanges in connection establishment (that is, line establishment) between the in-vehicle ECU 40 and the WAN 150 in the WAN connection processing unit 28 and a line state after line establishment. Examples of connection with the WAN 150 include connection with a Wi-Fi (registered trademark) network and connection with a cellular network. The exchange of line establishment described above is part of the exchange in the communication establishment process of the E2E connection. The WAN connection monitoring unit 17 holds a log of communication during the line establishment and a log of communication after the line establishment.

The time delivery proxy unit 18 holds the time information acquired by the time acquisition unit 13. In response to a request from the in-vehicle ECU 40, the time delivery proxy unit 18 synchronizes the time information acquired by the time acquisition unit 13 with the in-vehicle ECU 40 instead of the NTP server 160a. That is, the time delivery proxy unit 18 mediates the exchange of time information between the in-vehicle ECU 40 and the NTP server 160a. The exchange of time information between the in-vehicle ECU 40 and the NTP server 160a is part of the exchange in the communication establishment process of the E2E connection. The time delivery proxy unit 18 holds a log of this mediated exchange.

The name solution proxy unit 19 holds the name solution information acquired by the name solution information acquisition unit 14. The name solution proxy unit 19 synchronizes the name solution information, which is acquired by the name solution information acquisition unit 14, with the in-vehicle ECU 40 instead of the DNS server 160b in response to a request from the in-vehicle ECU 40. That is, the name solution proxy unit 19 mediates the exchange of name solution information between the in-vehicle ECU 40 and the DNS server 160b. The exchange of name solution information between the in-vehicle ECU 40 and the DNS server 160b is part of the exchange in the communication establishment process of the E2E connection. The name solution proxy unit 19 holds a log of this mediated exchange.

In the present embodiment, an example is given in which the name solution information acquisition unit 14 indirectly acquires the name solution information from the DNS server 160b via the ACP cloud 100a. The name solution proxy unit 19 may acquire and hold, for example, the log of the exchange between the ACP cloud 100a and the DNS server 160b from the ACP cloud 100a. In the present embodiment, an example is given in which the name solution information acquisition unit 14 indirectly acquires the name solution information from the DNS server 160b via the ACP cloud 100a. However, it is not necessarily limited to this. The name solution information acquisition unit 14 may be configured to acquire the name resolution information directly from the DNS server 160b.

The verification proxy unit 20 holds the certification verification information acquired by the verification information acquisition unit 15. The verification proxy unit 20 synchronizes the certification verification information, which is acquired by the verification information acquisition unit 15, with the in-vehicle ECU 40 instead of the certification verification server 160c in response to a request from the in-vehicle ECU 40. That is, the verification proxy unit 20 mediates the exchange of the certification verification information between the in-vehicle ECU 40 and the certification verification server 160c. The exchange of name solution information between the in-vehicle ECU 40 and the certification verification server 160c is part of the exchange in the communication establishment process of the E2E connection. The verification proxy unit 20 holds a log of this mediated exchange.

The present embodiment shows an example in which the verification information acquisition unit 15 indirectly acquires the certification verification information from the certification verification server 160c via the ACP cloud 100a. The verification proxy unit 20 may acquire and hold, for example, the log of the exchange between the ACP cloud 100a and the certification verification server 160c from the ACP cloud 100a. The present embodiment shows an example in which the verification information acquisition unit 15 indirectly acquires the certification verification information from the certification verification server 160c via the ACP cloud 100a. However, it is not necessarily limited to this. The verification information acquisition unit 15 may directly acquire the certification verification information from the certification verification server 160c.

The authentication proxy unit 21 mediates exchanges in the above-described server authentication and client authentication between the in-vehicle ECU 40 and the application server 140. This exchange is part of the exchange in the communication establishment process of the E2E connection. The authentication proxy unit 21 holds a log of this mediated exchange.

The rule acquisition unit 22 acquires a detection rule from the cloud server 100 via the WAN 150. The rule acquisition unit 22 stores the acquired detection rule in the rule storage 23. The rule acquisition unit 22 updates the detection rules stored in the rule storage 23 by storing a new detection rule in the rule storage 23. The detection rule is a rule for designating a cause identification log for each cause of a failure in the process of establishing the communication between the in-vehicle ECU 40 and the application server 140 (hereinafter referred to as a communication establishment process failure). The detection rule may be also referred to as a rule that designates a determination condition and the contents of a failure log to be output. The cause identification log is a log estimated to be able to identify the cause of the communication establishment process failure. The cause identification log may be referred to as a log that can identify the cause of the communication establishment process failure. For example, the detection rule may be information that designates conditions such as which part of the log is set as the failure log when which item of the log in which interaction has what value. The designated part may be, for example, a log character string or an error code.

The rule storage 23 stores detection rules. The rule storage 23 may be implemented by, for example, a non-volatile memory. The configuration of the rule storage 23 is not limited to storing the detection rule acquired by the rule acquisition unit 22. For example, for known failures, the rule storage 23 may store the detection rules in advance. The detection rule is preferably updatable. This is because even unknown failures can be dealt with by updating the detection rule.

Further, the monitoring unit 16 detects a failure in the communication establishment process. The process of detecting the failure in the communication establishment process corresponds to a failure detection process. The monitoring unit 16 detects the failure in the communication establishment process when there is a log indicated by the detection rule stored in the rule storage 23 among the logs managed by the monitoring unit 16. The monitoring unit 16 may detect the failure in the communication establishment process by periodically checking whether there is a log indicated by the detection rule. The monitoring unit 16 may detect the failure in the exchange corresponding to each of the WAN connection monitoring unit 17, the time delivery proxy unit 18, the name solution proxy unit 19, the verification proxy unit 20, and the authentication proxy unit 21. The monitoring unit 16 implements the detection based on the correspondence relation between the log held by the WAN connection monitoring unit 17, the time delivery proxy unit 18, the name solution proxy unit 19, the verification proxy unit 20, or the authentication proxy unit 21 and the detection rule.

The monitoring unit 16 may also detect the cause of the failure depending on the exchange in which the failure is detected in the communication establishment process. Examples of failure factors include the followings. A first failure factor is no success in the line establishment with the Wi-Fi network. This is detected by the WAN connection monitoring unit 17. A second failure factor is no success in the line establishment with the cellular network. This is also detected by the WAN connection monitoring unit 17. A third failure factor is no success in time information acquisition. This is detected by the time delivery proxy unit 18. A fourth failure factor is no success in name solution information acquisition. This is detected by the name solution proxy unit 19. A fifth failure factor is no success in certification verification information acquisition. This is detected by the verification proxy unit 20. A sixth failure factor is no success in server authentication or client authentication. This is detected by the authentication proxy unit 21. These factors are examples. The different factors may be detected.

Even in a case where the log indicated by the detection rules stored in the rule storage 23 does not exist, the monitoring unit 16 may detect a failure in the communication establishment process when an abnormal exchange different from the exchange desired in the normal state in the communication establishment process occurs. Examples of the abnormal exchange include various patterns such as "no response", "wrong response value", and "error response". The failure is detected in the communication establishment process when the abnormal exchange occurs in the WAN connection monitoring unit 17, the time delivery proxy unit 18, the name solution proxy unit 19, the verification proxy unit 20, or the authentication proxy unit 21. Also, the monitoring unit 16 may identify the failure factor based on a detection result indicating which exchange with the detected failure among exchanges with the WAN connection monitoring unit 17, the time delivery proxy unit 18, the name solution proxy unit 19, the verification proxy unit 20, and the authentication proxy unit 21.

When the monitoring unit 16 detects the failure in the communication establishment process, the failure notification unit 24 notifies the cloud server 100 of the detection of the failure. According to this, it becomes possible for the cloud server 100 to recognize the occurrence of a failure in the communication establishment process. The failure notification unit 24 may also notify the in-vehicle ECU 40 in which the failure was detected in the communication establishment process of the detection of the failure. According to this, it becomes possible for the in-vehicle ECU 40 to recognize the occurrence of a failure in the communication establishment process. The failure notification unit 24 may also notify the application server 140 in which the failure was detected in the communication establishment process of the detection of the failure. In this case, for example, the notification may be implemented via the cloud server 100. According to this, it becomes possible for the application server 140 to recognize the occurrence of the failure in the communication establishment process.

In a configuration in which the log of the exchange in the communication establishment process of E2E connection is not centrally managed, it is difficult for both the server outside the vehicle and the in-vehicle ECU 40 to recognize the occurrence of the failure in the communication establishment process. On the other hand, when the cloud server 100, the in-vehicle ECU 40, and the application server 140 can recognize the occurrence of the failure in the communication establishment process, it becomes easier to deal with the failure. Further, when providing a notification that the failure has been detected, the failure notification unit 24 may provide a notification of the failure factor identified for the failure. According to this, in the cloud server 100, the in-vehicle ECU 40, and the application server 140, it becomes easier to deal with failures.

When the monitoring unit 16 detects the failure in the process of establishing the communication, the log extraction unit 25 extracts a log (hereinafter, cause identification log) estimated to be related to the failure from among the logs managed by the monitoring unit 16. The process by this log extraction unit 25 corresponds to a log extraction process. When there is a log indicated by the detection rule stored in the rule storage 23, the log extraction unit 25 may extract the log designated by the detection rule as the cause identification log. The log extraction unit 25 may extract not only the log designated by the detection rule, but also a certain range of logs, such as logs before and after the designated log in time series, as the cause identification logs. When a unit having a function (hereinafter, log identification function) of identifying the cause identification log at the time of detecting the failure without the detection rule exists among the WAN connection monitoring unit 17, the time delivery proxy unit 18, the name solution proxy unit 19, the verification proxy unit 20, and the authentication proxy unit 21, the log extraction unit 25 may extract the cause identification log identified by the unit as the cause identification log.

The cause identification log output unit 26 outputs the cause identification log extracted by the log extraction unit 25. The cause identification log output unit 26 corresponds to a log output unit. Further, the process by the cause identification log output unit corresponds to a log output process. The cause identification log output unit 26 may output the cause identification log to the cloud server 100 on the WAN 150. The cloud server 100 can be referred as a server that collects the cause identification logs in order to identify the cause of failure on the network outside the vehicle. The cause identification log output unit 26 may output the cause identification log extracted by the log extraction unit 25 to an in-vehicle failure diagnosis device. OBD (On-Board Diagnostics) is known as the in-vehicle failure diagnosis device. For example, the cause identification log may be read from the OBD by a scan tool at a dealer or the like, and the read information may be sent from a dealer's terminal to the cloud server 100.

The abnormal log output unit 27 outputs a log (hereinafter referred to as an abnormal log) related to an abnormal exchange among the logs managed by the monitoring unit 16. The abnormal log output unit 27 also corresponds to the log output unit. Further, the process by the abnormal log output unit 27 also corresponds to the log output process. The abnormal log output unit 27 may output the abnormal log to the cloud server 100 on the WAN 150. The abnormal log output unit 27 may output the abnormal log when the monitoring unit 16 detects the failure in the communication establishment process, although the log extraction unit 25 cannot extract the cause identification log. As the abnormal log, a log of the exchange in which a failure occurred may be used. For example, a log related to requests and responses, or a log related to responses may be used. The range of the abnormal log is not set to be narrower than the range of the cause identification log.

When the abnormal log output unit 27 outputs the abnormal log to the cloud server 100, the rule acquisition unit 22 acquires, as a response to the abnormal log, a detection rule set based on the abnormal log from the cloud server 100 via the WAN 150. The details of the setting of the detection rule based on the abnormal log in the cloud server 100 will be described later.

### (Schematic configuration of cloud server 100)

The cloud server 100 includes, for example, a processor, a memory, an I/O, and a bus connecting these components, and executes functions of the ACP cloud 100a by executing a control program stored in the memory. The memory referred to here is a non-transitory tangible storage medium, and stores programs and data that can be read by a computer. The non-transitory tangible storage medium is implemented by a semiconductor memory or the like. The cloud server 100 having the functions of the ACP cloud 100a corresponds to a server and a collection server. Execution of a process of each functional block of the ACP cloud 100a by the computer corresponds to execution of a communication management method.

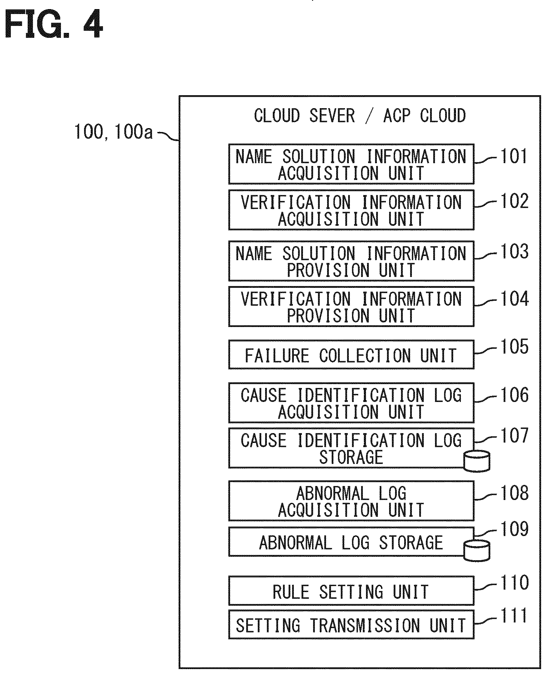

Here, a schematic configuration of the cloud server 100 will be described with reference to FIG. 4. As shown in FIG. 2, the cloud server 100 includes, as functional blocks of the ACP engine 10a, a name solution information acquisition unit 101, a verification information acquisition unit 102, a name solution information provision unit 103, a verification information provision unit 104, and a failure collection unit 105, a cause identification log acquisition unit 106, a cause identification log storage 107, an abnormal log acquisition unit 108, an abnormal log storage 109, a rule setting unit 110, and a setting transmission unit 111. A part or all of the functions executed by the cloud server 100 may be configured as hardware by one or a plurality of ICs or the like. A part or all of the functional blocks included in the cloud server 100 may be implemented by a combination of software execution by a processor and hardware members.

The name solution information acquisition unit 101 acquires the name solution information from the DNS server 160b. The verification information acquisition unit 102 acquires the certification verification information from the certification verification server 160c. The name solution information provision unit 103 provides the name solution information acquired by the name solution information acquisition unit 101 to the ACP engine 10a. The verification information provision unit 104 provides the certification information acquired by the certification verification information acquisition unit 102 to the ACP engine 10a.

The failure collection unit 105 collects failure information notified from the failure notification unit 24 of the ACP engine 10a. The failure information includes information on the occurrence of the failure in the communication establishment process and information of the failure factor of the failure. These pieces of information correspond to the E2E connection failure information described above. The failure collection unit 105 preferably collects the failure information from the ACP engines 10a of a plurality of vehicles. This is because collecting the E2E connection failure information from a plurality of vehicles makes it easier to identify the tendency, occurrence rate, and the like of failures in the process of establishing the E2E connection.

The cause identification log acquisition unit 106 acquires the cause identification log output from the cause identification log output unit 26 of the ACP engine 10a. The cause identification log acquisition unit 106 corresponds to a log acquisition unit. Further, the process by the cause identification log acquisition unit 106 corresponds to a log acquisition process. The cause identification log storage 107 stores the cause identification log acquired by the cause identification log acquisition unit 106. The cause identification log storage 107 corresponds to a log storage. Further, the process of storing the cause identification log acquired by the cause identification log acquisition unit 106 in the cause identification log storage 107 corresponds to a log storage process. A non-volatile memory may be used as the cause identification log storage 107. The cause identification log storage 107 may store the failure information collected by the failure collection unit 105 and the cause identification log output about the failure in association with each other.

According to this, in the ACP cloud 100a, based on the cause identification log stored in the cause identification log storage 107, the cause of the failure in the process of establishing the E2E connection is identified, and it is possible to take measures to eliminate the failure. In an example, the cause of the failure may be identified from a Cause value included in the cause identification log. The failure for which the cause identification log is acquired is a known failure. Therefore, the cause of the failure may be automatically identified from the cause identification log using a learning device or the like that has undergone machine learning in advance. The action for eliminating the failure may be set to provision of notification indicating the occurrence of the failure and its cause to the target to be resolved. For example, when there is an error in the response from the certification verification server 160c, a notification may be provided to an administrator of the certification verification server 160c. The ACP cloud 100a or the administrator of the ACP cloud 100a may identify and notify of the action to eliminate the failure.

The abnormal log acquisition unit 108 acquires the abnormal log output from the abnormal log output unit 27 of the ACP engine 10a. The abnormal log acquisition unit 108 also corresponds to the log acquisition unit. Further, the process by the cause identification log acquisition unit 106 corresponds to the log acquisition process. The abnormal log storage 109 stores the abnormal log acquired by the abnormal log acquisition unit 108. The abnormal log storage 109 also corresponds to a log storage. Further, the process of storing the cause identification log acquired by the abnormal log acquisition unit 108 in the abnormal log storage 109 corresponds to the log storage process. A non-volatile memory may be used as the abnormal log storage 109. The abnormal log storage 109 may store the failure information collected by the failure collection unit 105 and the abnormal log output about the failure in association with each other.

Thereby, even when there is an unknown failure in the process of establishing the E2E connection, it is possible to identify the cause of the failure in the process of establishing the E2E connection based on the abnormal log stored in the abnormal log storage 109. In an example, the administrator of the ACP cloud 100a may identify the cause of the failure by analyzing the abnormal log. Since the failure for which the abnormal log is acquired is the unknown failure, the identification of the cause of the failure from the abnormal log may be performed manually, for example.

The rule setting unit 110 sets a detection rule for designating the cause identification log for each cause of failure in the communication establishment process. The rule setting unit 110 may set detection rules based on input from the administrator of the ACP cloud 100a. The rule setting unit 110 may set the detection rule for designating the cause identification log for the cause of a failure of which state has been changed to the identified state from the unknown state through the analysis of the abnormal described above. The process from identifying the cause of the failure in the process of establishing the E2E connection to setting the detection rule may be executed by the ACP cloud 100a using the machine learning, for example.

The setting transmission unit 111 transmits the detection rule set by the rule setting unit 110 to the communication module 10 (that is, the ACP engine 10a). The communication module 10 that has acquired this detection rule with the rule acquisition unit 22 stores this detection rule in the rule storage 23. As a result, the cause identification log is extracted according to the newly stored detection rule even for failures for which the cause identification log could not be extracted until then. That is, the setting transmission unit 111 transmits the detection rule set by the rule setting unit 110 to the communication module 10, so that the communication module 10 extracts the log designated by the detection rule as the cause identification log. Thereby, it is possible to quickly identify the cause of the failure for which the new detection rule is set, when the next failure occurs. When transmitting the detection rule to the communication module 10, the setting transmission unit 111 may transmit an instruction to reproduce the exchange in the communication establishment process related to the detection rule, and promptly extract the cause identification log.

### (Failure detection-related process in ACP engine 10a)

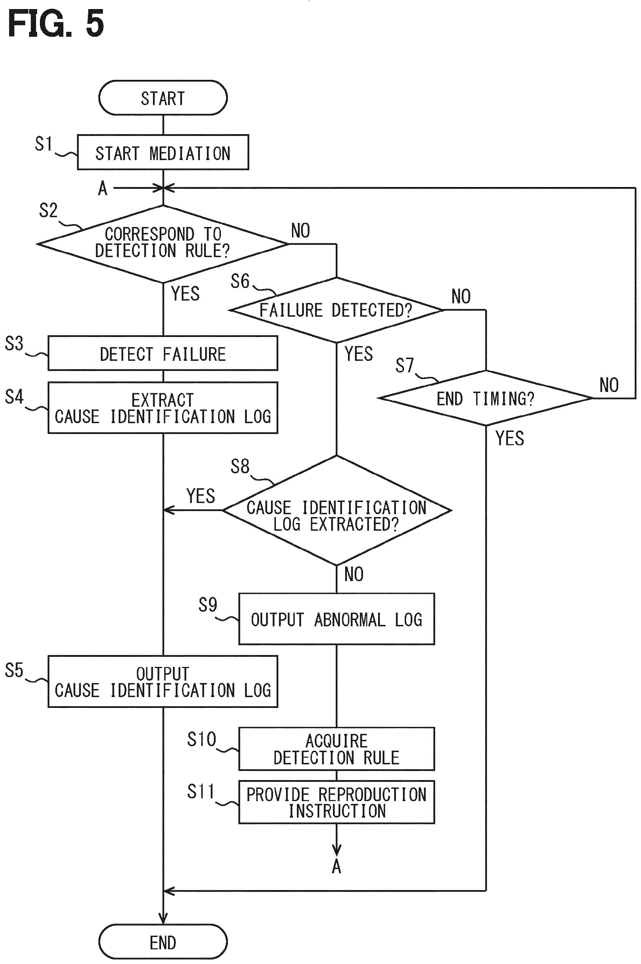

Here, an example of the flow of the process (hereinafter referred to as failure detection-related process) related to failure detection in the process of establishing the E2E connection in the ACP engine 10a (that is, the communication module 10) will be described using the flowchart of FIG. 5. The flowchart of FIG. 5 may be configured to start when the exchange in the process of establishing the E2E connection between the in-vehicle ECU 40 and the application server 140 starts. The failure detection-related process may be executable for each combination of the in-vehicle ECU 40 and the application server 140.

First, in step S1 , the monitoring unit 16 starts mediating exchanges in the process of establishing communication between the in-vehicle ECU 40 and the application server 140 . That is, the monitoring unit 16 starts mediating the exchange in the process of establishing the E2E connection. Thereby, the monitoring unit 16 sequentially retains information on the exchange as the exchange progresses in the process of establishing the E2E connection. The monitoring unit 16 sequentially confirms whether there is a log indicated by the detection rule stored in the rule storage 23 among the logs that are sequentially retained as the exchange progresses.

In step S2, when it is confirmed by the monitoring unit 16 that there is a log indicated by the detection rule (YES in S2), the process proceeds to step S3. On the other hand, when there is no log indicated by the detection rule (NO in S2), the process proceeds to step S6.

In step S3, the monitoring unit 16 detects a failure in the E2E connection establishment process. The monitoring unit 16 may detect the failure factor based on the correspondence relation between the log held by the WAN connection monitoring unit 17, the time delivery proxy unit 18, the name solution proxy unit 19, the verification proxy unit 20, or the authentication proxy unit 21 and the detection rule.

In step S4, the log extraction unit 25 extracts the cause identification log including the log designated by the detection rule. In step S5, the cause identification log output unit 26 outputs the cause identification log extracted in S4 to the cloud server 100 on the WAN 150, and ends the failure detection-related process.

In step S6, when the monitoring unit 16 detects the failure in the process of establishing the E2E connection (YES in S6), the process proceeds to step S8. That is, when the failure that cannot be detected based on the existence of the detection rule is detected, the process proceeds to S8. On the other hand, when the monitoring unit 16 has not detected the failure in the process of establishing the E2E connection (NO in S6), the process proceeds to step S7.

In step S7, when it is an end timing of the failure detection-related process (YES in S7), the failure detection-related process ends. On the other hand, when it is not the end timing of the failure detection-related process (NO in S7), the process returns to S2 and repeats the process. That is, the mediation of the exchange in the E2E connection establishment process continues. An example of the end timing of the failure detection-related process is a timing at which the E2E connection is established.

The end timing of the failure detection-related process is preferably set to a timing at which the E2E connection is established and the communication between the in-vehicle ECU 40 and the application server 140 is completed. This is because, even after the E2E connection is established, the failure in the exchange that can be detected by the ACP engine 10a can be detected by continuing the monitoring. The exchange failures that can be detected by the ACP engine 10a even after the establishment of the E2E connection include a connection failure with the WAN 150, a bandwidth depletion failure, and the like.

In step S8, in a case where the log extraction unit 25 has extracted the cause identification log (YES in S8), the process proceeds to S5. The case where the log extraction unit 25 can extract the cause identification log in S8 includes a case where the log identification function described above can extract the cause identification log without the detection rule. On the other hand, when the log extraction unit 25 cannot extract the cause identification log (NO in S8), the process proceeds to step S9. The monitoring unit 16 may be configured such that none of the WAN connection monitoring unit 17, the time delivery proxy unit 18, the name solution proxy unit 19, the verification proxy unit 20, and the authentication proxy unit 21 has the log identification function. In this case, when the process in S6 is YES, the process may proceed to step S9.

In step S9, the abnormal log output unit 27 outputs, to the cloud server 100 on the WAN 150, the abnormal log related to the abnormal exchange when the failure is detected in S6 among the logs managed by the monitoring unit 16. After the cloud server 100 acquires the abnormal log, the cloud server 100 sets a new detection rule for designating the cause identification log for the cause of the failure detected in S6 by analyzing this abnormal log. Then, this new detection rule set by the cloud server 100 is transmitted from the cloud server 100. The time from the output of the abnormal log is output in S9 to the transmission of the new detection rule may or may not be a short time.

In step S10, the rule acquisition unit 22 acquires the new detection rule transmitted from the cloud server 100 as a response to the transmission of the abnormal log. In step S11, the monitoring unit 16 reproduces the exchange in the process of establishing the E2E connection in which the failure was detected in S6, returns to S2, and repeats the process. In S11, the monitoring unit 16 may restart the process of establishing the E2E connection in which the failure was detected in S6, thereby returning to S1 and repeating the process.

### (Brief of first embodiment)

According to the configuration of the first embodiment, the ACP engine 10a centrally manages logs, which are exchange information in the communication establishment process between the in-vehicle ECU 40 and the application server 140 on the WAN 150. Therefore, when the failure is detected in the process of establishing the communication, it is possible for the vehicle to extract the cause identification log estimated to be related to the failure from this log. Then, the ACP engine 10a outputs this cause identification log, and the ACP cloud 100a acquires and stores the output cause identification log. Therefore, it is possible to identify and eliminate the failure in the process of establishing the communication connection based on the output cause identification log. As a result, it is possible to more easily eliminate the failure in the process of establishing the communication connection between the in-vehicle ECU and the vehicle exterior connection destination.

According to the configuration of the first embodiment, the ACP cloud 100a collects the E2E connection failure information from a plurality of vehicles. Therefore, as described above, it becomes easier to identify the trend, occurrence rate, and the like of the failures in the process of establishing the E2E connection. Further, by identifying the trend, the occurrence rate, and the like of failures in the process of establishing the E2E connection, it is possible to prioritize a failure with the large effect and reduce the opportunity loss forthe E2E connection. In addition, for example, even in an event where a failure occurs in a service provided for a different country, it is possible to horizontally and globally expand and reduce the time required to resolve the failure.

According to the configuration of the first embodiment, the ACP engine 10a extracts the cause identification log and outputs it to the ACP cloud 100a. Therefore, the data exchanged between the ACP engine 10a and the ACP cloud 100a and the data stored in the ACP cloud 100a can be made smaller while leaving the data necessary for identifying the cause of the failure.

### (Second Embodiment)

In the above-described embodiment, a configuration was shown in which all exchanges from P1 to P7 in FIG. 3 in the process of establishing the E2E connection are centrally managed by the monitoring unit 16. However, the present disclosure is not necessarily the configuration. The monitoring unit 16 may be configured to centrally manage a plurality of exchanges that are part of P1 to P7. As the ratio of exchanges centrally managed by the monitoring unit 16 increases, the number of failures whose causes can be identified increases. As the result, it is possible to eliminate the failures.

### (Third Embodiment)

The above-described embodiment shows the configuration in which the log extraction unit 25 of the ACP engine 10a extracts the cause identification log and the cause identification log output unit 26 outputs the cause identification log. However, the present disclosure is not necessarily limited to this. For example, the ACP engine 10a may be configured without the log extraction unit 25 and the cause identification log output unit 26. In this case, when the monitoring unit 16 detects the failure in the process of establishing the communication, the abnormal log output unit 27 outputs the failure log so that the cause of the failure can be identified. Even with this configuration, it is possible to identify the failure in the process of establishing the communication connection based on this abnormal log, and to eliminate the failure. Accordingly, it is possible to more easily eliminate the failure in the process of establishing the communication connection between the in-vehicle ECU and the vehicle exterior connection destination.

### (Fourth Embodiment)

In the above-described embodiment, the configuration in which the communication module 10 performs the functions of the ACP engine 10a has been shown. However, the present disclosure is not necessarily limited to this configuration. For example, the functions of the ACP engine 10a may be performed by an electronic control unit other than the communication module 10 that can be used in the vehicle. When adopting this configuration, the ACP engine 10a may communicate with the network outside the vehicle via the communication module 10. The cause identification log output unit 26 and the abnormal log output unit 27 may also perform the output to the network outside the vehicle via the communication module 10.

It should be noted that the present disclosure is not limited to the embodiments described above, and various modifications are possible within the scope indicated in the claims, and embodiments obtained by appropriately combining technical means disclosed in different embodiments are also included in the technical scope of the present disclosure. Further, the control unit and the method thereof described in the present disclosure may be implemented by a dedicated computer which includes a processor programmed to perform one or more functions executed by a computer program. Alternatively, the device and the method thereof described in the present disclosure may also be implemented by a dedicated hardware logic circuit. Alternatively, the device and the method thereof described in the present disclosure may also be implemented by one or more dedicated computers configured as a combination of a processor executing a computer program and one or more hardware logic circuits. The computer program may also be stored in a computer-readable non-transitory tangible storage medium as instructions to be executed by a computer.

## Claims

1. A vehicle device configured to be used for a vehicle, the device comprising:
a monitoring unit (16) configured to
recognize a status of an exchange in a communication establishment process between an in-vehicle electronic control unit (40) mounted on the vehicle and a connection destination (140) on a network outside the vehicle,
centrally manage a log of the exchange, and
detect a failure in the communication establishment process; and
a log output unit (26, 27) configured to output a log estimated to be related to the failure among the log centrally managed by the monitoring unit when the monitoring unit has detected the failure.

2. The vehicle device according to claim 1, further comprising:
a log extraction unit (25) configured to extract a cause identification log that is the log that enables identification of a cause of the failure among the log centrally managed by the monitoring unit when the monitoring unit has detected the failure,
wherein
the log extraction unit (26) outputs, as the log estimated to be related to the failure, the cause identification log extracted by the log extraction unit.

3. The vehicle device according to claim 2, further comprising:
a rule storage (23) configured to store a detection rule for designating the cause identification log for each cause of the failure in the communication establishment process,
wherein
the monitoring unit detects the failure in the communication establishment process when the log indicated by the detection rule stored in the rule storage exists among the log managed by the monitoring unit, and
the log extraction unit extracts, as the cause identification log, the log designated by the detection rule.

4. The vehicle device according to claim 3, further comprising
a rule acquisition unit (22) configured to
acquire the detection rule via the network outside the vehicle, and
store the detection rule in the rule storage.

5. The vehicle device according to claim 4, wherein
even in a case where the log indicated by the detection rule stored in the rule storage does not exist, the monitoring unit detects the failure in the communication establishment process when an abnormal exchange different from the exchange desired in a normal state in the communication establishment process occurs,
the device further includes an abnormal log output unit configured to output abnormal that is the log related to the abnormal exchange among the log centrally managed by the monitoring unit to a collection server that is a server that collects the cause identification log for identifying the cause of the failure on the network outside the vehicle, and
the rule acquisition unit is configured to acquire, as a response to a transmission of the abnormal log, the detection rule set based on the abnormal log via the network outside the vehicle.

6. The vehicle device according to claim 1, wherein
the monitoring unit detects the failure in the communication establishment process when an abnormal exchange different from the exchange desired in a normal state in the communication establishment process occurs, and
the log output unit (27) is configured to output, as the log estimated to be related to the failure, an abnormal log that is the log related to the abnormal exchange among the log managed by the monitoring unit.

7. The vehicle device according to any one of claims 1 to 6, wherein
a communication establishment between the in-vehicle electronic control unit and the connection destination requires an exchange with a third party server that is a server on the network outside the vehicle in addition to the exchange with the connection destination,
the third party server is different from the connection destination, and
the monitoring unit mediates the exchange in the communication establishment process between the in-vehicle electronic control unit and the third party server to centrally manage the log that is information of the exchange in the communication establishment process.

8. The vehicle device according to any one of claims 1 to 6, wherein
the log output unit is configured to output the log to a collection server that is a server, on the network outside the vehicle, that collects the log for identifying a cause of the failure.

9. A server configured to be used on a network outside a vehicle, the server comprising:
a log acquisition unit (106, 108) configured to acquire a log output from a vehicle device used for the vehicle, wherein the vehicle device is configured to centrally manage the log that is information of an exchange in a communication establishment process between an in-vehicle device (40) mounted on the vehicle and a connection destination (140) on the network outside the vehicle to output the log estimated to be related to a failure in the communication establishment process among the centrally managed log; and
a log storage (107, 109) configured to store the log acquired by the log acquisition unit from the vehicle device.

10. A server according to claim 9, further comprising:
a rule setting unit (110) configured to set a detection rule for designating a cause identification log that is the log estimated to enable identification of a cause of the failure; and
a setting transmission unit (111) configured to transmit the detection rule set by the rule setting unit to the vehicle device for extracting, the vehicle device, as the cause identification log, the log designated by the detection rule and output the log.

11. A communication management method executed by at least one processor, the method comprising:
a monitoring process of centrally managing a log that is information of the exchange in a communication establishment process between an in-vehicle electronic control unit (40) mounted on a vehicle and a connection destination (140) on a network outside the vehicle;
a failure detection process of detecting a failure in the communication establishment process; and
a log output process of outputting the log estimated to be related to the failure among the log managed by the monitoring process when having detected the failure in the failure detection process.

12. A communication management method executed by at least one processor, the method comprising:
a log acquisition process of acquiring a log output from a vehicle device (10a) used for the vehicle, wherein the vehicle device is configured to recognize and centrally manage the log that is a status of an exchange in a communication establishment process between an in-vehicle device (40) mounted on the vehicle and a connection destination (140) on the network outside the vehicle to output the log estimated to be related to a failure in the communication establishment process among the centrally managed log; and
a log storage process of storing the log acquired by the log acquisition process from the vehicle device.
